(19) Europäisches Patentamt
European Patent Office
Office européen des brevets

(11) **EP 2 332 643 B1**

(12) **FASCICULE DE BREVET EUROPEEN**

(45) Date de publication et mention
de la délivrance du brevet:
**07.01.2015 Bulletin 2015/02**

(51) Int Cl.:
***B01J 8/04*** *(2006.01)*

(21) Numéro de dépôt: **10290593.2**

(22) Date de dépôt: **05.11.2010**

(54) **Dispositif compact de mélange de fluides dans un réacteur à écoulement descendant**

Kompakte Flüssigkeitsmischvorrichtung in einem Reaktor mit Abwärtsströmung

Compact device for mixing fluids in a reactor with downward flow

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.11.2009 FR 0905595**

(43) Date de publication de la demande:
**15.06.2011 Bulletin 2011/24**

(73) Titulaire: **IFP Energies nouvelles
92852 Rueil-Malmaison Cedex (FR)**

(72) Inventeurs:
• **Augier, Frédéric
69360 Saint Symphorien d'Ozon (FR)**
• **Darmancier, Denis
38200 Vienne (FR)**
• **Boyer, Christophe
69390 Charly (FR)**

(56) Documents cités:
**EP-A1- 1 477 222      US-A- 5 567 396
US-A1- 2004 134 836**

**Description**

Domaine de l'invention

La présente invention concerne un dispositif compact de mélange de fluides dans un réacteur à écoulement descendant et son utilisation pour la réalisation de réactions exothermiques. L'invention concerne également un réacteur comprenant un dispositif compact de mélange. L'invention s'applique dans le domaine des réactions exothermiques et plus particulièrement aux réactions d'hydrotraitement, de d'hydrodésulfuration, d'hydrogéazotation, d'hydrocraquage, d'hydrogénation et d'hydrodéaromatisation.

Examen de l'art antérieur

Les réactions exothermiques réalisées en raffinage et/ou en pétrochimie nécessitent d'être refroidies par un fluide additionnel pour éviter un emballement thermique du réacteur dans lequel elles sont effectuées. Il est également nécessaire de garder un gradient de température homogène au sein du réacteur afin d'éviter l'existence de points chauds dans le lit de catalyseur. Ces points chauds peuvent diminuer prématurément l'activité du catalyseur. Ils conduisent également à des réactions non sélectives. Il est donc important de disposer d'au moins une chambre de mélange dans un réacteur qui permette une répartition homogène en température des fluides et un refroidissement des fluides réactionnels à une température désirée.

Pour effectuer cette homogénéisation l'homme de l'art est souvent conduit à utiliser un agencement spécifique d'internes souvent complexes comportant une introduction du fluide de trempe la plus homogène possible dans la section du réacteur. Cette injection s'effectue en aval de la chambre de mélange soit par des systèmes multitrous tels que ceux décrits par exemple dans les documents de brevets EP-B-O, 716,881, US 5,025,831 soit par des systèmes de type araignée tels que ceux décrits par exemple dans les documents de brevets US 4,836,989. Ces boîtes sont généralement très complexes. Elles sont souvent doubles voir triples telles que celles décrites dans le brevet US 5,232,283, souvent munies d'internes tels que des pâles, des ailettes, des chicanes ou des déflecteurs comme décrits par exemple dans le brevet US 5,567,396. Les inconvénients majeurs de ce type de système sont la complexité de réalisation et de mise en oeuvre, la perte de charge induite, et plus particulièrement l'encombrement (place prise dans le réacteur).

Il est également connu par la demande de brevet FR-A-2,824,495 un dispositif de trempe permettant d'assurer un échange efficace entre le ou les fluide(s) de trempe et le ou les fluide(s) du procédé. Ce dispositif est intégré dans une enceinte et comprend une canne d'injection du fluide de trempe, un baffle de collecte des fluides, la boite de trempe proprement dite, opérant le mélange entre le fluide de trempe et l'écoulement descendant, et un système de distribution composé d'une cuvette perforée et d'un plateau distributeur. La boîte de trempe comporte un déflecteur assurant la mise en mouvement tourbillonnaire des fluides selon une direction sensiblement non radiale et non parallèle à l'axe de ladite enceinte et en aval du déflecteur, dans le sens de circulation du fluide réactionnel, au moins une section de passage de sortie du mélange de fluides formé dans la boîte. Ce dispositif permet de pallier certains inconvénients des différents systèmes de l'art antérieur mais reste très encombrant.

Certains dispositifs actuels permettent de réduire cet encombrement. Par exemple, les brevets US 6,881,387; EP-B-1,721,660 et US 6,180,068 décrivent des boites de mélange plus plates que celles de l'art antérieur. Cependant ces boites de trempe comprennent encore beaucoup d'internes qui, pour être efficaces, sont susceptibles de produire de fortes pertes de charge.

Le document US2004/0134836 décrit un dispositif de mélange dans lequel les fluides passent verticalement à travers d'une zone de mélange horizontale.

La présente invention a donc pour objet de palier un ou plusieurs des inconvénients de l'art antérieur en proposant un dispositif compact de mélange. Le dispositif selon l'invention permet un gain substantiel en terme d'encombrement du réacteur et assure un bon mélange des fluides et une bonne homogénéité en température.

Description sommaire de l'invention

Un premier objet de l'invention est de fournir un dispositif compact de mélange de fluides dans un réacteur à écoulement descendant.

Un autre objet de l'invention concerne l'utilisation d'un dispositif compact de mélange de fluides dans un réacteur à écoulement descendant pour la réalisation de réactions exothermiques.

Un autre objet de l'invention concerne un réacteur comprenant un dispositif compact de mélange de fluides.

Un autre objet de l'invention concerne l'utilisation d'un réacteur comprenant un dispositif compact de mélange de fluides pour la réalisation de réactions exothermiques.

Selon un premier aspect, l'invention concerne un dispositif compact de mélange de fluides dans un réacteur à écoulement descendant comprenant :

- au moins un moyen de collecte sensiblement horizontal pourvu d'une conduite de collecte verticale pour recevoir les fluides,
- une chambre de mélange annulaire située en aval du moyen de collecte dans le sens de circulation des fluides, ladite chambre comprenant une extrémité d'entrée directement reliée à ladite conduite de collecte et une extrémité de sortie pour le passage des fluides, ladite extrémité de sortie est positionnée suivant la direction radiale de l'enceinte du réacteur, la chambre de mélange annulaire étant positionnée à la périphérie de l'enceinte du réacteur et la longueur de ladite chambre qui est définie par l'angle formé par les plans passant par les deux extrémités de ladite chambre étant comprise entre 130 et 200 degrés, et
- au moins un moyen d'injection placé dans ladite conduite de collecte, ledit moyen d'injection se situant au niveau de l'extrémité d'entrée de la chambre de mélange annulaire,
- un plateau de prédistribution horizontal comprenant au moins une cheminée, ledit plateau situé en aval de ladite chambre à une distance d2, dans le sens de circulation des fluides.

Selon une autre variante de l'invention, la distance d2 entre le plateau de prédistribution et la chambre de mélange annulaire est comprise entre 0 et 100 mm. De manière préférée, cette distance est comprise 0,25 et 100 mm. De manière encore plus préférée, cette distance est comprise 0,5 et 5 mm.

Selon une autre variante de l'invention, la distance d2 entre le plateau de prédistribution et la chambre de mélange annulaire est égale à 0 mm, la chambre de mélange annulaire étant en contact avec le plateau de prédistribution.

Selon une autre variante de l'invention, la chambre de mélange annulaire est positionnée à une distance d1 de l'enceinte du réacteur, la distance d1 variant de 0,5% à 25% du diamètre du réacteur.

Selon une autre variante de l'invention, le diamètre d de la chambre de mélange annulaire est compris entre 0,05 et 0,5 m. De manière préféré le diamètre est compris entre 0,1 et 0,3 m. De manière encore plus préférée, il est compris entre 0,15 et 0,25 m.

Selon un second aspect, l'invention concerne l'utilisation du dispositif compact de mélange pour la réalisation de réactions exothermiques.

Selon un troisième aspect, l'invention concerne un réacteur de forme allongée le long d'un axe sensiblement vertical dans lequel on fait circuler du haut vers le bas dudit réacteur au moins un fluide réactionnel à travers au moins un lit de catalyseur, ledit réacteur comprenant en aval du lit de catalyseur dans le sens de circulation dudit fluide réactionnel au moins un dispositif compact de mélange.

Selon une variante de l'invention, le réacteur comprend en outre, un plateau de distribution sensiblement horizontal positionné en aval du dispositif compact de mélange dans le sens de circulation des fluides.

Selon une autre variante de l'invention, le réacteur comprend en outre un deuxième lit de catalyseur situé en aval du dispositif compact de mélange et du plateau de distribution.

Selon un quatrième aspect de l'invention, l'invention, concerne l'utilisation pour la réalisation de réactions exothermiques d'un réacteur de forme allongée le long d'un axe sensiblement vertical dans lequel on fait circuler du haut vers le bas dudit réacteur au moins un fluide réactionnel à travers au moins un lit de catalyseur, ledit réacteur comprenant en aval du lit de catalyseur dans le sens de circulation dudit fluide réactionnel au moins un dispositif compact de mélange.

Description sommaire des figures

La figure 1 représente une coupe axiale d'un réacteur multi-lit à écoulement descendant comprenant le dispositif compact de mélange selon l'invention. La flèche en gras représente le sens d'écoulement des fluides dans le réacteur.

La figure 2 représente une vue du dessus du dispositif compact de mélange selon la coupe représentée par la ligne A-A en pointillé.

La figure 3 représente l'efficacité totale de mélange du dispositif selon l'invention en fonction de l'efficacité de mélange mesurée sur le plateau de prédistribution (abscisse $\eta_{swirl}$) et pour différente efficacité de la chambre de mélange annulaire ($\eta_{tore}$).

Description détaillée de l'invention

Le dispositif compact de mélange selon l'invention est utilisé dans un réacteur dans lequel s'effectuent des réactions exothermiques telles que des réactions d'hydrotraitement, de d'hydrodésulfuration, d'hydrogéazotation, d'hydrocraquage, d'hydrogénation et d'hydrodéaromatisation. Le réacteur a une forme allongée le long d'un axe sensiblement vertical. On fait circuler du haut vers le bas dudit réacteur au moins un fluide réactionnel (ou fluide de process, selon la terminologie anglo-saxonne) à travers au moins un lit de catalyseur. En sortie du lit, le fluide réactionnel est recueilli puis mélangé à un fluide de trempe (ou fluide de quench, selon la terminologie anglo-saxonne) dans le dispositif compact selon l'invention avant d'être distribué au lit de catalyseur situé en aval du plateau de distribution. L'aval et l'amont sont définis par rapport au sens de l'écoulement du fluide réactionnel.

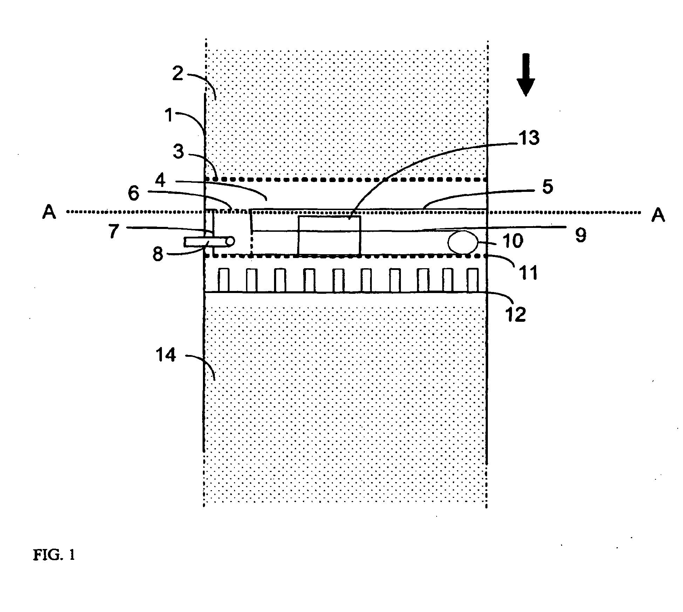

Le fluide réactionnel peut être un gaz ou un liquide ou un mixte contenant du liquide ou du gaz; cela dépend du type de réaction effectuée dans le réacteur. Le fluide réactionnel traversant le lit de catalyseur amont est collecté par un moyen de collecte sensiblement horizontal (5) pourvu d'une conduite de collecte sensiblement verticale (7) (cf. figure 1). Par "sensiblement vertical(e)" et par "sensiblement horizontal(e)", on entend au sens de la présente invention une variation d'un plan avec la verticale, respectivement l'horizon, d'un angle $\alpha$ compris entre $\pm$ 5 degrés. Le moyen de collecte est constitué d'une plaque pleine disposée dans le plan perpendiculaire à l'axe longitudinal de l'enceinte sous la grille du lit catalytique. Cette plaque s'étend radialement sur toute la surface du réacteur. Elle comporte à son extrémité une ouverture (6) à laquelle est reliée ladite conduite de collecte verticale (7). Le moyen de collecte sert à recueillir l'écoulement du fluide réactionnel provenant du lit catalytique amont et dirige ce fluide vers ladite conduite de collecte. Le moyen de collecte est distant de la grille du lit catalytique d'une hauteur (H1) créant un espace de collecte (4). Cet espace est nécessaire pour permettre le drainage du fluide réactionnel jusqu'à ladite conduite. Cette hauteur H1 doit être choisie de manière à limiter la perte de charge lors de la collecte du fluide s'écoulant du lit de catalyseur (2) et à limiter la hauteur de garde. La hauteur de garde ne doit pas modifier le drainage du fluide réactionnel vers la conduite de collecte, ni son écoulement dans cette conduite. Dans un mode de réalisation de l'invention, la hauteur H1 est comprise entre 30 et 200 mm, de préférence entre 30 et 150 mm, de manière encore plus préférée entre 40 et 100 mm. Selon un mode de réalisation de l'invention, la hauteur H1 est égale à 100 mm.

La conduite de collecte verticale (7) débouche dans la chambre de mélange annulaire (9) au niveau de l'extrémité d'entrée de ladite chambre. Cette conduite dirige l'écoulement du fluide réactionnel et du fluide de trempe dans ladite chambre. Le diamètre de la conduite verticale (7) est choisi de manière à limiter les pertes de charge. Il sera donc choisi de manière à limiter la vitesse d'écoulement, dans ladite conduite de collecte, du (ou des) fluide(s) réactionnel(s) provenant du lit de catalyseur situé en amont du moyen de collecte. Préférentiellement la vitesse desdits fluides sera comprise entre 2 et à 5 m.s$^{-1}$.

Le fluide de trempe est injecté par un moyen d'injection (8) dans la conduite de collecte verticale. L'injection s'effectue perpendiculairement au sens d'écoulement du fluide réactionnel dans la conduite de collecte. Le moyen d'injection utilisé est bien connu de l'homme du métier. Il peut être un piquage latéral, ou une buse ou araignées, ou une rampe de buses, etc.

Le moyen d'injection se situe à n'importe quelle hauteur dans la conduite de collecte à partir de l'ouverture (6). Préférentiellement le moyen d'injection se situe au niveau de la connexion de la conduite de collecte avec l'extrémité d'entrée de la chambre de mélange annulaire.

Le fluide de trempe peut être liquide ou gazeux ou mixte contenant du liquide ou du gaz. Par exemple le fluide de trempe peut être de l'hydrogène.

La chambre de mélange annulaire (9) permet le mélange du fluide réactionnel avec le fluide de trempe. Ladite chambre a une forme toroïdale incomplète. Elle est formée par un tube recourbé de façon à former un arc de cercle. Elle comprend donc deux extrémités distinctes l'une de l'autre: une extrémité dite d'entrée et une extrémité dite de sortie (10), opposée à l'extrémité d'entrée. L'extrémité d'entrée est reliée à la conduite de collecte et l'extrémité de sortie est ouverte et permet au mélange de fluides de s'écouler sur le plateau de prédistribution. L'extrémité de sortie (10) est positionnée suivant la direction radiale de l'enceinte du réacteur (1). Ainsi les fluides sortants de la section d'ouverture (10) sont projetés dans la direction tangentielle de la section du réacteur (1). Cette disposition permet de maintenir un écoulement rotatif du mélange des fluides sur le plateau de prédistribution (11). Grâce à cet écoulement rotatif, le ou les fluides réactionnels et le fluide de trempe peuvent continuer à se mélanger sur le plateau de prédristibution. Le diamètre et la longueur de la chambre de mélange annulaire (9) sont choisis de manière à garantir un bon mélange entre l'écoulement issu du lit (2) et le fluide de trempe, tout en limitant la perte de charge dans la conduite de collecte et l'encombrement dans le réacteur. La longueur de la chambre de mélange annulaire est définie par l'angle formé par les plans passant par les deux extrémités de ladite chambre. La longueur de ladite chambre est comprise entre 130 et 200 degrés. Selon un mode préférentiel, ladite chambre selon l'invention a la forme d'un tore ouvert; la section de ladite chambre est un cercle. Dans un autre mode de réalisation de l'invention, la section de ladite chambre peut être ovale ou rectangulaire. Quelle que soit la forme de la section de la chambre de mélange annulaire, le diamètre (ou la hauteur) d de ladite chambre sera choisie de manière à limiter au maximum la perte de charge et de manière à limiter l'encombrement spatial dans le réacteur. Ce diamètre d est comprise entre 0,05 et 0,5 m, plus préférentiellement entre 0,1 et 0,3 m, préférentiellement entre 0,15 et 0,4 m, encore plus préférentiellement entre 0,15 et 0,25 m, encore plus préférentiellement entre 0,1 et 0,35 m. La perte de charge du dispositif de mélange selon l'invention dépend uniquement de la hauteur d de la chambre annulaire de mélange. Cette perte de charge suit une loi classique de perte de charge et peut être définie par l'équation suivante:

$$\Delta P = \frac{1}{2}\rho_m V_m^2 \chi \qquad\qquad (1)$$

où $\Delta P$ est la perte de charge, $\rho_m$ la densité moyenne du mélange gaz+liquide dans la chambre de mélange annulaire, $V_m$ la vitesse moyenne du mélange gaz+liquide et $\chi$ est le coefficient de perte de charge associé au dispositif de mélange. Ce coefficient a été mesuré à une valeur de 2 quelles que soient les conditions d'écoulement. Selon un mode préféré de réalisation de l'invention, le diamètre sera le plus petit possible afin de limiter l'encombrement de la chambre de mélange annulaire sur la plaque de prédistribution et d'avoir une efficacité de mélange la plus grande en sortie de ladite chambre. Pour ces raisons, il sera préféré d'utiliser le plus petit diamètre d possible permettant de respecter un éventuel critère de perte de charge maximale. La gamme préférentielle de perte de charge lors du dimensionnement de dispositifs industriels est 0,05 bars $< \Delta P_{max} <$ 0,5 bars (1 bar = $10^5$ Pa).

Les fluides ont un mouvement rotationnel (ou de swirling selon la terminologie anglo-saxonne) dans la chambre de mélange annulaire (9). Ce mouvement favorise le mélange et l'homogénéité en température des fluides réactionnels et du fluide de trempe.

La chambre de mélange annulaire est positionnée à la périphérie de l'enceinte du réacteur et en amont du plateau de prédistribution dans le sens d'écoulement des fluides. Ce positionnement de ladite chambre permet de maximiser sa longueur et d'obtenir un gain de place dans le réacteur. La chambre de mélange annulaire ayant une forme courbée, elle longe l'enceinte du réacteur à une distance d1. Afin que le dispositif compact de mélange selon l'invention encombre le moins possible l'espace du réacteur, la distance d1 sera comprise entre 0,5% et 25% du diamètre du réacteur, préférentiellement entre 0,5% et 10% du diamètre du réacteur, encore plus préférentiellement entre 1 % et 5% du diamètre du réacteur.

Dans un mode préféré de réalisation, ladite chambre est en contact direct avec ledit plateau. Dans cette configuration, la chambre de mélange annulaire est donc posée directement sur le plateau de prédistribution. Dans un autre mode de réalisation, ladite chambre se situe à une distance d2 du plateau de prédistribution. Dans ce cas, ladite chambre sera fixée sur le plateau par des moyens de fixations bien connus de l'homme du métier tels que des pieds creux. Ces pieds seront positionnés dans le sens de l'écoulement du mélange. La distance d2 varie entre 0 et 100 mm, plus préférentiellement entre 0,25 et 100 mm, plus préférentiellement entre 0 et 50 mm, encore plus préférentiellement 0,5 et 30 mm, encore plus préférentiellement entre 0,5 et 5 mm.

Le positionnement de la chambre de mélange annulaire en périphérie du réacteur et amont du plateau de prédistribution permet également un écoulement tangentiel du mélange des fluides en dessus ou sur de plateau de prédistribution, suivant le mode de réalisation de l'invention. Cet écoulement tangentiel au dessus dudit plateau permet d'optimiser l'efficacité du mélange. En effet, le mélange entre le fluide réactionnel et le fluide de trempe continue de s'effectuer au niveau du plateau de prédistribution contrairement aux dispositifs de mélange décrits dans l'art antérieur dans lesquels le mélange ne se fait que dans la chambre de trempe. Ainsi l'efficacité du dispositif compact de mélange selon l'invention est augmentée. On obtient un mélange homogène en température et en concentration des deux fluides sur le plateau de pré-distribution (11).

Le plateau de pré-distribution (11) situé sous la chambre de mélange annulaire (9) se compose d'une plaque perforée et de une ou plusieurs cheminées (13). Les cheminées (13) sont situées de manière préférée au centre du plateau de prédistribution pour ne pas gêner l'écoulement rotatif du mélange de fluides sur ledit plateau. Le design de cette plaque est optimisé de façon à diminuer la perte de charge et à produire une garde liquide de quelques centimètres. A titre d'exemple non limitatif, le plateau de pré-distribution est perforé par des trous de 10 mm suivant un pas triangulaire. Le plateau de prédistribution s'étend radialement sur toute la surface du réacteur et est disposé dans le plan perpendiculaire à l'axe longitudinal de l'enceinte. Il permet une première séparation du mélange, le liquide s'écoule au travers desdits trous et le gaz s'écoule au travers desdites cheminées.

Selon un mode de réalisation de l'invention, le dispositif selon l'invention comprend en outre un plateau de distribution qui permet d'optimiser la distribution du fluide réactionnel refroidi sur le lit catalytique situé en aval. Ces plateaux de distribution sont bien connus de l'homme du métier. On pourra se référer à la demande de brevet WO-A-2003/039733 pour une description complète dudit plateau de distribution.

Par rapport aux dispositifs décrits dans l'art antérieur, le dispositif compact selon la présente invention offre les avantages suivants :

- une efficacité de mélange accrue grâce à l'écoulement rotatif dans la chambre de mélange annulaire et sur ou au niveau du plateau de prédistribution,
- une simplicité de mise en oeuvre,
- une compacité accrue du fait de l'emplacement de la chambre de mélange annulaire très rapproché du plateau de prédistribution, et de l'injection du fluide de trempe au niveau de ladite chambre.

- une faible perte de charge induite due à l'absence d'interne dans la chambre de mélange annulaire.

Description détaillée des figures

La figure 1 illustre le dispositif de trempe selon l'invention disposé dans un réacteur (1) de forme allongée le long d'un axe sensiblement vertical dans laquelle on fait circuler du haut vers le bas au moins un fluide réactionnel à travers au moins un lit de catalyseur (2). Le dispositif de mélange selon l'invention est disposé sous le lit de catalyseur (2), par rapport à l'écoulement du fluide réactionnel dans l'enceinte (1). La grille de support (3) sert à porter le lit de catalyseur (2) de manière à dégager un espace vide (4) sous celui-ci. Cet espace vide ou espace de collecte (4) permet de collecter l'écoulement issu du lit de catalyseur (2) au niveau du moyen de collecte. Le fluide réactionnel qui s'écoule est par exemple composé d'une phase gaz et d'une phase liquide. Le moyen de collecte (5), aussi appelé baffle, est une plaque pleine uniquement ouverte en un emplacement (6) pour drainer l'écoulement du fluide vers la chambre de mélange annulaire (9). Le fluide réactionnel issu du lit (2) est ainsi contraint dans l'espace vide (4) à passer par la conduite de collecte verticale (7). Le fluide de trempe est injecté dans la conduite de collecte (7) via une conduite d'injection (8). Dans cet exemple, la chambre de mélange annulaire (9) a une forme torique. Ladite chambre (9) est reliée par son extrémité d'entrée à la conduite de collecte (7). Le fluide de trempe et l'écoulement du fluide réactionnel issu du lit supérieur (2) sont ainsi forcés à emprunter ladite chambre (9) dans laquelle ils se mélangent et ont un écoulement rotatif. En sortie de ladite chambre, le mélange des fluides s'écoule sur le plateau de pré-distribustion (11). La chambre de mélange annulaire est posée sur le plateau de pré-distribution et à la périphérie du réacteur. Cette position permet un gain de place dans le réacteur. Le mélange continue à se faire grâce à un écoulement rotatif des fluides sur la grille du plateau de distribution. Les phases gaz et liquide du mélange se séparent sur la plaque perforée (11), qui est munie d'une ou plusieurs cheminées centrales (13) permettant le passage du gaz. Le liquide passe par les perforations de la plaque pour former un écoulement de type pommeau de douche ou pluie. Le nombre et la taille des perforations de la plaque perforée (11) sont choisis de manière à ce qu'une certaine hauteur de liquide soit toujours présente sur la plaque. Le nombre et la taille des cheminées centrales (13) sont choisis de manière à optimiser la séparation des phases gaz et liquide sur la plaque (12), tout en maintenant une distance entre le haut des cheminées (13) et le baffle de collecte (5) suffisante pour ne pas générer de perte de charge importante à cet endroit du dispositif. Le rôle de la plaque perforée (11) est de distribuer l'écoulement sortant de la chambre de mélange (9) pour alimenter le plateau distributeur (12) de manière relativement équilibrée. Le plateau distributeur (12) a pour rôle de redistribuer les phases gaz et liquide en entrée du lit de catalyseur (14) situé en aval de ce plateau distributeur.

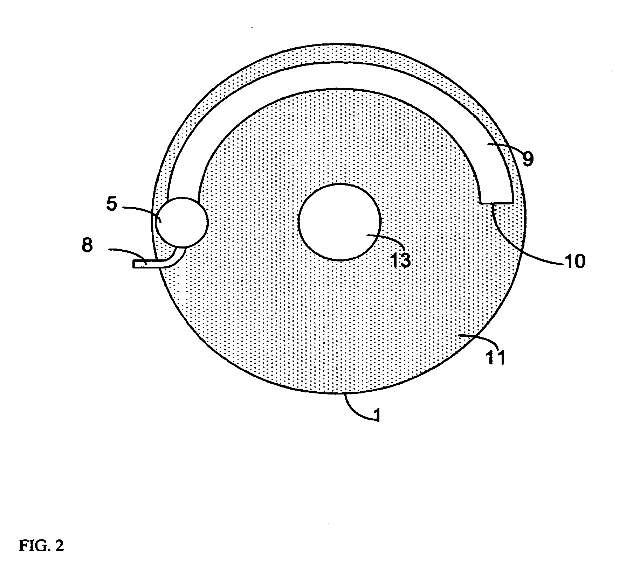

La chambre de mélange (9) selon l'invention, illustrée sur la figure 2 est de forme annulaire, et plus précisément a la forme d'un tore. Elle est formée par un tube recourbé de façon à former un arc de cercle, non fermé. Ladite chambre est ouverte en son extrémité opposée à la conduite de collecte verticale, et la section d'ouverture (10) de la chambre de mélange annulaire (9) est sensiblement positionnée suivant la direction radiale de l'enceinte (1). Ainsi l'écoulement des fluides sortants de la section d'ouverture (10) est projeté dans la direction tangentielle de la section de l'enceinte (1). Cette disposition permet de maintenir un écoulement rotatif du mélange sur le plateau de prédistribution (11). Le diamètre et la longueur de la chambre de mélange annulaire (9) sont choisis de manière à garantir un bon mélange entre l'écoulement issu du lit (2) et le fluide de trempe, tout en limitant la perte de charge dans la conduite de collecte et l'encombrement dans le réacteur.

Dans les exemples ci-dessous, on emploie indifféremment les termes "tore" ou "chambre de mélange" ou "chambre de mélange annulaire" pour désigner la chambre de mélange annulaire selon l'invention.

**Exemple 1: Analyse de l'écoulement des fluides au niveau de la chambre annulaire selon l'invention.**

On simule l'écoulement de deux fluides dans la chambre de mélange annulaire selon l'invention en utilisant un logiciel de mécanique des fluides (Fluent 6.3, développé par la société ANSYS Inc, Canonburg, USA). Les simulations numériques ont porté sur l'analyse des phénomènes de mélange:

    (a) dans la chambre de mélange annulaire,
    (b) en sortie de ladite chambre.

Les caractéristiques des différentes chambres de mélange annulaires testées et les conditions expérimentales de simulation sont présentées dans le tableau 1, ci-dessous.

Pour effectuer ces simulations, on se place dans le cas le plus défavorable, c'est à dire dans le cas où les fluides (eau liquide et azote gazeux) ne sont pas mélangés du tout à l'entrée du tore. On impose donc au logiciel la configuration suivante: les fluides sont alimentés à deux températures clairement distinctes T1 et T2 en entrée du tore, de telle manière que la moitié de la section d'entrée du tore est à la température T1 et l'autre moitié à la température T2.

Les caractéristiques des chambres de mélange annulaires testées sont résumées dans le tableau 1:

Tableau 1.

|  | Diamètre du tore (m) | Longueur du tore (m) | Débit phase liquide (m³·h⁻¹) | Débit phase gaz (m³ h⁻¹) | Température T1 (K) | Température T2 (K) |
|---|---|---|---|---|---|---|
| Tore n°1 | 0,1 | 1 | 22,62 | 5,65 | 273 | 323 |
| Tore n°2 | 0,1 | 1 | 11,88 | 59,38 | 273 | 323 |
| Tore n°3 | 0,1 | 1 | 5,94 | 25,45 | 273 | 323 |
| Tore n°4 | 0,3 | 3 | 53,44 | 229,02 | 273 | 323 |

La distribution de températures calculée en sortie du tore par le logiciel de simulation, est utilisée pour estimer l'efficacité de mélange du tore. Cette efficacité est définie par la relation suivante :

$$\eta = 1 - \frac{2\sigma(T)}{\Delta T_{MAX}} \qquad (2)$$

ou $\eta$ est l'efficacité du mélange, $\sigma$ est l'écart type des températures et $\Delta$Tmax l'écart maximal entre les températures, soit la valeur absolue de (T2-T1). Les multiples simulations ont mis en évidence que le mélange théorique dans le tore suit globalement une loi de type:

$$\eta = 1 - \exp^{\left(-\frac{x}{1.5Ud}\right)} \qquad (3)$$

ou x est la distance linéaire parcourue dans le tore, U est la vitesse du liquide dans le tore et d le diamètre du tore.
Les résultats obtenus des différentes simulations sont présentés dans le tableau 2 ci-dessous. Les efficacités de mélange sont calculées à mi longueur de la chambre de mélange (U2) et en sortie de la chambre de mélange.

Tableau 2

| Efficacité du mélange | Tore n°1 | Tore n°2 | Tore n°3 | Tore n°4 |
|---|---|---|---|---|
| mi-longueur de la chambre de mélange | 99% | 85% | 80% | 92% |
| en sortie de la chambre de mélange | 99,9% | 92% | 90% | 99% |

L'efficacité de mélange (selon équation 1) généré à mi longueur de la chambre de mélange annulaire ou en sortie de ladite chambre est supérieure à 80 %. Dans certaines configurations de chambre, cette efficacité est même égale à 99%. Ceci signifie qu'on obtient un très bon mélange de fluides dans la chambre selon notre invention et une excellente homogénéisation des fluides en température.

**Exemple 2: Analyse de l'écoulement des fluides au niveau du plateau de prédistribution selon l'invention.**

On cherche à déterminer l'efficacité du mélange généré dans le dispositif de mélange selon l'invention au niveau du plateau de prédistribution. Pour cela, on simule l'écoulement des fluides sur le plateau de prédistribution avec le logiciel de mécanique des fluides (Fluent 6.3, développé par la société ANSYS Inc, Canonburg, USA). Les caractéristiques des différents dispositifs de mélange et les conditions expérimentale testées sont résumées dans le tableau 3. Les simulations sont réalisées en écoulement monophasique, c'est à dire en l'absence de phase gaz. Elles sont donc représentatives du cas où le fluide de trempe est du liquide, et où seules les phases liquides doivent être mélangées.

Tableau 3.

| | Diamètre du tore (m) | Longueur du tore (° degrés) | Diamètre du réacteur (m) | Vitesse phase liquide (m/s) | Température T1 | Température T2 | Hauteur de liquide sur le plateau de prédistribution en m |
|---|---|---|---|---|---|---|---|
| Tore n°1 | 0,1 | 90° | 0,48 | 0,5 | 273 | 323 | 0,12 |
| Tore n°2 | 0,1 | 90° | 0,48 | 1 | 273 | 323 | 0,12 |
| Tore n°3 | 0,1 | 90° | 0,48 | 0,2 | 273 | 323 | 0,12 |
| Tore n°4 | 0,1 | 90° | 0,48 | 2 | 273 | 323 | 0,12 |
| Tore N°5 | 0,1 | 90° | 0,48 | 0,5 | 273 | 323 | 0,05 |
| Tore N°6 | 0,1 | 90° | 0,48 | 1 | 273 | 323 | 0,05 |
| Tore N°7 | 0,3 | 90° | 2,5 | 1 | 273 | 323 | 0,15 |

Pour étudier de l'efficacité de mélange au niveau du plateau de prédistribution dans le dispositif selon l'invention, on divise la section du tore en deux zones de même surface : l'une étant à une température T1 et l'autre à une température T2. Cette condition expérimentale correspond au cas le plus défavorable, c'est à dire au cas où il n'y a pas eu de mélange des deux fluides dans la chambre de mélange annulaire. On mesure, dans ces conditions, uniquement l'efficacité de l'écoulement rotatif sur le plateau de prédistribution.

Les résultats obtenus sont présentés dans le tableau 4.

| Efficacité du mélange | Tore n°1 | Tore n°2 | Tore n°3 | Tore n°4 | Tore n°5 | Tore n°6 | Tore n°7 |
|---|---|---|---|---|---|---|---|
| sur le plateau de prédistibution | 91% | 90% | 96% | 88% | 82% | 85% | 87% |

L'efficacité de mélange (selon équation 1) généré en sortie de tore sur la plaque de prédistribution est toujours supérieure ou égale à 80%. Ceci signifie que l'écoulement rotatif généré participe fortement au mélange des fluides dans la gamme de fonctionnement étudiée par simulation.

Conclusion des exemples 1 et 2:

En considérant que les efficacités de mélange dans le tore et en sortie de tore sur le plateau de prédistribution peuvent être cumulées, l'efficacité totale de mélange du dispositif selon l'invention s'exprime par la formule suivante:

$$\eta_{total} = 1 - (1 - \eta_{swirl}) * (1 - \eta_{tore}) \qquad (4)$$

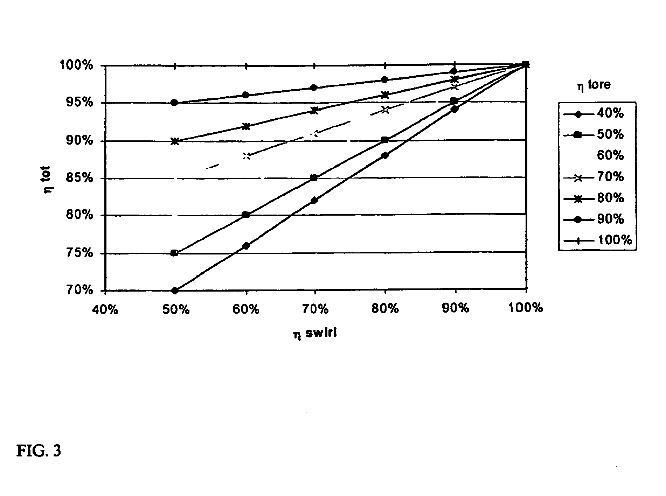

La figure 3 illustre le cumul des efficacités de mélange. Si l'efficacité de mélange dans le tore ($\eta_{tore}$) est de 50% et l'efficacité de mélange en sortie de tore ($\eta_{swirl}$) sur le plateau de prédistribution de 80%, on obtient une efficacité globale de mélange supérieure à 90%. Ainsi, selon le dispositif de l'invention, il n'est pas nécessaire d'avoir une efficacité de mélange des fluides optimisée dans la chambre de mélange annulaire contrairement aux dispositifs de mélange décrits dans l'art antérieur. Le dispositif de mélange selon l'invention présente une efficacité élevée de mélange des fluides grâce à la combinaison de la chambre de mélange annulaire posée sur la plateau de prédistribution et du plateau de prédistribution. Cet agencement permet une continuité de l'écoulement rotatif des fluides sur le plateau de prédistribution. Il en résulte que le mélange des fluides continue à s'effectuer sur ledit plateau.

**Exemple 3 : Essais sur maquette froide**

A titre d'exemple non limitatif, des mesures d'efficacité de mélange ont été réalisées avec un dispositif de mélange selon l'invention disposé dans réacteur. Les conditions expérimentales sont les suivantes :

Un réacteur de diamètre de 480 mm est découpé en deux secteurs identiques dans sa partie supérieure. Les deux secteurs sont alimentés à l'identique en gaz (air) et en liquide (eau). La hauteur des secteurs est de 500 mm. Les deux secteurs sont alimentés par des fluides à des températures différentes T1 (283 K) et T2 (330 K). Sous le lit granulaire, porté par la grille support est disposé le baffle de collecte. La distance entre la grille support et le baffle de collecte est égale à 100 mm. La conduite de collecte verticale est de hauteur 150 mm et de diamètre 100 mm. Les caractéristiques structurelles des différents tores de mélange testés sont présentées dans le tableau 5. Le tube d'injection du fluide de trempe (eau) a un diamètre de 20 mm. Le plateau de prédistribution est muni d'une cheminée centrale de diamètre 4 cm et de hauteur 25 cm. Le plateau de prédistribution est perforé par des trous de 1 cm de diamètre selon un pas triangulaire de 6,4 cm. Sous le plateau de prédistribution est positionné un plateau distributeur de type plateaux à cheminées perforées. En aval du plateau de distribution, dans le sens d'écoulement des fluides est positionné un lit de billes inertes afin de représenter un lit catalytique. A 3 cm sous les premières couches de billes inertes sont positionnés 6 thermocouples répartis sur la section de colonne. L'efficacité du mélange du dispositif de mélange selon l'invention est calculée à partir des relevés de températures fournis par les thermocouples, selon l'équation (2). Pour cela, l'écart type des températures relevées est calculé préalablement.

Les tests sont réalisés pour les conditions de débits suivantes :

Débit de liquide sortant du lit supérieur : 15 m$^3$ h$^{-1}$;
Débit de gaz sortant du lit supérieur: 65 m$^3$.h$^{-1}$; et
Débit de liquide de trempe 5 m$^3$.h$^{-1}$.

Les résultats obtenus sont présentés dans le tableau 5.

|  | Diamètre du tore en mm | Longueur du tore (° degré) | Efficacité thermique mesurée globale | Efficacité théorique de mélange dans le tore | Efficacité théorique totale estimée par l'équation (4) |
|---|---|---|---|---|---|
| Essai 1 | 50 | 180° | 99,8% | 50% | 90% |
| Essai 2 | 100 | 180° | 99,95% | 74% | 95% |
| Essai 3 | 50 | 270° | 99,7% | 63% | 93% |
| Essai 4 | 100 | 90° | 99,85% | 50% | 90% |

L'efficacité théorique est calculée en utilisant une efficacité de mélange de 80% sur le plateau de prédistribution.
Parmi toutes les configurations testées, l'efficacité thermique mesurée globale est, dans tous les cas, supérieure à 99,7 %, l'écart à 100 % étant dû au bruit de la mesure (non significatif). Ces résultats montrent que même pour des tores de trempe dont l'efficacité théorique de mélange a été calculée à 50% selon l'équation (2), le mélange rotatif en sortie de tore sur le plateau de prédistribution permet d'atteindre des performances proches de 100% de mélange. Ainsi pour réaliser le dimensionnement des dispositifs de trempe à échelle industrielle, une efficacité de mélange théorique de 50% relative au tore de trempe sera ciblée, ce qui permettra d'atteindre une efficacité globale proche de 100%.

**Exemple 4**

Un exemple de dimensionnement du dispositif de mélange est reporté. Il se base sur un diamètre d'enceinte réactionnelle de 2,5 m. La densité de la phase liquide est de 800 kg.m$^{-3}$, et celle du gaz est de 10 kg.m$^{-3}$ . Les débits de liquide et de gaz sortant du premier lit catalytique sont respectivement de 0,11 et 0,49 m$^3$.s$^{-1}$. Le débit de liquide de trempe injecté dans la conduite de collecte verticale via un moyen d'injection est de 0,03 m$^3$.s$^{-1}$. La hauteur de l'espace de collecte (H1) est de 0,1 m de manière à générer une perte de charge négligeable dans cette zone. La conduite de collecte verticale a pour diamètre 0,4 m. Le moyen d'injection du fluide de trempe a un diamètre de 0,12 m. Le diamètre de la chambre de mélange annulaire est de 0,3 m, pour une longueur linéaire de 3,1 m. L'espace entre l'enceinte du réacteur et la chambre de mélange annulaire est de 0,03 m. Quatre cheminées centrales sont disposées en carré au milieu de la plaque perforée du plateau de prédistribution. Ces cheminées ont un diamètre 0,3 m et une hauteur 0,25 m. Le plateau de prédistribution est perforé par des trous de 1 cm de diamètre selon un pas de perforation triangulaire de 6,4 cm. Sous la plaque perforée est positionné un plateau distributeur à cheminées. La distance entre la plaque perforée de prédistribution et le plateau distributeur est de 0,25 m.

*Estimation des performances :*

La perte de charge du dispositif de trempe est estimée suivant l'équation (3) à 16 16 000 Pa. La hauteur de garde liquide sur le plateau perforé est de 15 cm, conformément aux observations réalisées sur la maquette froide. Le dispositif selon l'invention permet d'assurer un bon mélange en sortie de tore de trempe. L'efficacité théorique du tore de trempe est selon l'équation (2) de 54%. D'après les calculs et mesures réalisés sur maquette froide, ceci est suffisant pour assurer une efficacité totale du dispositif proche de 100%.

*Encombrement du dispositif*

L'encombrement du dispositif selon l'invention, délimité par la grille de support du lit de catalyseur (élément 3 sur la figure 1) et par au plateau de prédistribution (élément 11 sur la figure 1) est d'environ 0,5 m. Il est d'environ 0,75 m si l'on rajoute l'encombrement du plateau de distribution (élément 12) situé en dessous de la plaque de prédistribution .
Le dispositif de mélange décrit dans le demande de brevet FR-A-2,824,495 utilise également une grille de support du lit de catalyseur et une plaque de prédistribution située juste au dessus d'un plateau de distribution. L'encombrement de ce dispositif, calculé entre la grille de support de lit catalytique et plaque de prédistribution est d'environ 0,88 m.
A titre de comparaison, le dispositif de mélange selon l'invention permet un gain d'espace de 76% par rapport au dispositif décrit dans la demande FR-A-2,824,495. Les 0,38 m qui ont été gagnés par rapport au dispositif de l'art antérieur peuvent être utilisés dans les lits de catalyseur. Ainsi le dispositif compact de mélange selon l'invention permet d'améliorer également les performances d'un réacteur par une augmentation de la quantité de catalyseur dans les lits catalytiques.

**Revendications**

1.   Dispositif compact de mélange de fluides dans un réacteur à écoulement descendant comprenant :

   - au moins un moyen de collecte sensiblement horizontal (5) pourvu d'une conduite de collecte verticale (7) pour recevoir les fluides,
   - une chambre de mélange annulaire (9) située en aval du moyen de collecte (5) dans le sens de circulation des fluides, ladite chambre comprenant une extrémité d'entrée directement reliée à ladite conduite de collecte (7) et une extrémité de sortie (10) pour le passage des fluides, ladite extrémité de sortie (10) est positionnée suivant la direction radiale de l'enceinte du réacteur (1), la chambre de mélange annulaire (9) étant positionnée à la périphérie de l'enceinte du réacteur (1) et la longueur de ladite chambre qui est définie par l'angle formé par les plans passant par les deux extrémités de ladite chambre étant comprise entre 130 et 200 degrés, et
   - au moins un moyen d'injection (8) placé dans ladite conduite de collecte, ledit moyen d'injection se situant au niveau de l'extrémité d'entrée de la chambre de mélange annulaire (9),
   - un plateau de prédistribution horizontal (11) comprenant au moins une cheminée (13), ledit plateau situé en aval de ladite chambre (9) à une distance d2, dans le sens de circulation des fluides,

2.   Dispositif selon la revendication 1, **caractérisé en ce que** la distance d2 est comprise entre 0 et 100 mm.

3.   Dispositif selon la revendication 1 à 2, **caractérisé en ce que** distance d2 est égale à 0 mm, la chambre de mélange annulaire (9) étant en contact avec le plateau de prédistribution (11).

4.   Dispositif selon la revendication 1 à 2 **caractérisé en ce que** la distance d2 est comprise entre 0,25 et 100 mm, de préférence entre 0,5 et 5 mm.

**5.** Dispositif selon l'une quelconque des revendications, **caractérisé en ce que** ladite chambre est positionnée à une distance d1 de l'enceinte du réacteur, la distance d1 variant de 0,5% à 25% du diamètre du réacteur.

**6.** Dispositif selon l'une quelconque des revendications précédentes, **caractérisé en ce que** le diamètre d de ladite chambre est compris entre 0,05 et 0,5 m, de préférence entre 0,1 et 0,3 m, de manière encore plus préférée entre 0,15 et 0,25 m.

**7.** Utilisation du dispositif selon l'une quelconque des revendications précédentes pour la réalisation de réactions exothermiques.

**8.** Réacteur (1) de forme allongée le long d'un axe sensiblement vertical dans lequel on fait circuler du haut vers le bas dudit réacteur (1) au moins un fluide réactionnel à travers au moins un lit de catalyseur (2), ledit réacteur comprenant en aval du lit de catalyseur (2) dans le sens de circulation dudit fluide réactionnel au moins un dispositif de mélange selon l'une des revendications 1 à 6.

**9.** Réacteur selon la revendication 8, **caractérisé en ce qu'**il comprend en outre, un plateau de distribution (12) sensiblement horizontal positionné en aval du dispositif de mélange dans le sens de circulation des fluides.

**10.** Réacteur selon l'une des revendications 8 ou 9, **caractérisé en ce qu'**il comprend en outre un deuxième lit de catalyseur (14) situé en aval du dispositif de mélange et du plateau de distribution.

**11.** Utilisation d'un réacteur selon l'une quelconque des revendications 8 à 10 pour la réalisation de réactions exothermiques.

**Patentansprüche**

**1.** Kompakte Fluidmischvorrichtung in einem Reaktor mit Abwärtsströmung, welche umfasst:

- wenigstens ein im Wesentlichen horizontales Sammelmittel (5), das mit einer vertikalen Sammelleitung (7) zum Aufnehmen der Fluide versehen ist,
- eine ringförmige Mischkammer (9), die sich in der Zirkulationsrichtung der Fluide stromabwärts des Sammelmittels (5) befindet, wobei die Kammer ein direkt mit der Sammelleitung (7) verbundenes Eingangsende und ein Ausgangsende (10) für den Durchgang der Fluide umfasst, wobei das Ausgangsende (10) entlang der radialen Richtung des Gehäuses des Reaktors (1) positioniert ist, wobei die ringförmige Mischkammer (9) am Umfang des Gehäuses des Reaktors (1) positioniert ist und die Länge der Kammer, welche durch den Winkel definiert ist, der von den durch die zwei Enden der Kammer verlaufenden Ebenen gebildet wird, zwischen 130 und 200 Grad beträgt, und
- mindestens ein Einspritzmittel (8), das in der Sammelleitung angeordnet ist, wobei sich das Einspritzmittel an dem Eingangsende der ringförmigen Mischkammer (9) befindet,
- eine horizontale Vorverteilschale (11), die mindestens einen Kamin (13) umfasst, wobei sich die Platte in der Zirkulationsrichtung der Fluide in einem Abstand d2 stromabwärts der Kammer (9) befindet.

**2.** Vorrichtung nach Anspruch 1, **dadurch gekennzeichnet, dass** der Abstand d2 zwischen 0 und 100 mm beträgt.

**3.** Vorrichtung nach Anspruch 1 bis 2, **dadurch gekennzeichnet, dass** der Abstand d2 gleich 0 mm ist, wobei sich die ringförmige Mischkammer (9) in Kontakt mit der Vorverteilschale (11) befindet.

**4.** Vorrichtung nach Anspruch 1 bis 2, **dadurch gekennzeichnet, dass** der Abstand d2 zwischen 0,25 und 100 mm beträgt, vorzugsweise zwischen 0,5 und 5 mm.

**5.** Vorrichtung nach einem der vorhergehenden Ansprüche, **dadurch gekennzeichnet, dass** die Kammer in einem Abstand d1 von dem Gehäuse des Reaktors positioniert ist, wobei der Abstand d1 von 0,5 % bis 25 % des Durchmessers des Reaktors variiert.

**6.** Vorrichtung nach einem der vorhergehenden Ansprüche, **dadurch gekennzeichnet, dass** der Durchmesser der Kammer zwischen 0,05 und 0,5 m, vorzugsweise zwischen 0,1 und 0,3 m, noch stärker bevorzugt zwischen 0,15 und 0,25 m beträgt.

**7.** Verwendung der Vorrichtung nach einem der vorhergehenden Ansprüche für die Durchführung exothermer Reaktionen.

**8.** Reaktor (1) mit einer entlang einer im Wesentlichen vertikalen Achse lang gestreckten Form, in welchem mindestens ein Reaktionsfluid vom oberen zum unteren Bereich des Reaktors (1) durch mindestens ein Katalysatorbett (2) hindurch zirkuliert wird, wobei der Reaktor in der Zirkulationsrichtung des Reaktionsfluids stromabwärts des Katalysatorbetts (2) mindestens eine Mischvorrichtung nach einem der Ansprüche 1 bis 6 umfasst.

**9.** Reaktor nach Anspruch 8, **dadurch gekennzeichnet, dass** er außerdem eine im Wesentlichen horizontale Verteilschale (12) umfasst, die in der Zirkulationsrichtung der Fluide stromabwärts der Mischvorrichtung positioniert ist.

**10.** Reaktor nach einem der Ansprüche 8 oder 9, **dadurch gekennzeichnet, dass** er außerdem ein zweites Katalysatorbett (14) umfasst, dass sich stromabwärts der Mischvorrichtung und der Verteilschale befindet.

**11.** Verwendung eines Reaktors nach einem der Ansprüche 8 bis 10 für die Durchführung exothermer Reaktionen.

**Claims**

**1.** A compact device for mixing fluids in a downflow reactor comprising :

- at least one substantially horizontal gathering means (5) provided with a vertical gathering line (7) intended to receive the fluids,
- an annular mixing chamber (9) located downstream from gathering means (5) in the direction of circulation of the fluids, said chamber comprising an inlet end directly connected to said gathering line (7) and an outlet end (10) for passage of the fluids, said outlet end (10) being positioned in the radial direction of reactor enclosure (1), said annular mixing chamber (9) being positioned on the periphery of reactor enclosure (1) and the length of said chamber, defined by the angle formed by the planes passing through the two ends of said chamber being in the range between 130 and 200 degrees, and
- at least one injection means (8) arranged in said gathering line, said injection means being located at the level of the inlet end of annular mixing chamber (9),
- a horizontal predistribution plate (11) comprising at least one chimney (13), said plate being located downstream from said chamber (9) at a distance d2, in the direction of circulation of the fluids.

**2.** A device as claimed in claim 1, **characterized in that** distance d2 ranges between 0 and 100 mm.

**3.** A device as claimed in claim 1 to 2, **characterized in that** distance d2 is 0 mm, annular mixing chamber (9) being in contact with predistribution plate (11).

**4.** A device as claimed in claim 1 to 2, **characterized in that** distance d2 ranges between 0.25 and 100 mm, preferably between 0.5 and 5 mm.

**5.** A device as claimed in any one of the previous claims, **characterized in that** said chamber is positioned at a distance d1 from the reactor enclosure, distance d1 ranging from 0.5 % to 25 % of the diameter of the reactor.

**6.** A device as claimed in any one of the previous claims, **characterized in that** diameter d of said chamber ranges between 0.05 and 0.5 m, preferably between 0.1 and 0.3 m, and more preferably between 0.15 and 0.25 m.

**7.** Use of the device as claimed in any one of the previous claims for carrying out exothermic reactions.

**8.** A reactor (1) of elongate shape along a substantially vertical axis wherein at least one reaction fluid is circulated from the top to the bottom of said reactor (1) through at least one catalyst bed (2), said reactor comprising downstream from catalyst bed (2), in the direction of circulation of said reaction fluid, at least one mixing device as claimed in any one of claims 1 to 6.

**9.** A reactor as claimed in claim 8, **characterized in that** it also comprises a substantially horizontal distribution plate (12) positioned downstream from the mixing device in the direction of circulation of the fluids.

**10.** A reactor as claimed in any one of claims 8 or 9, **characterized in that** it also comprises a second catalyst bed (14) arranged downstream from the mixing device and the distribution plate.

**11.** Use of a reactor as claimed in any one of claims 8 to 10 for carrying out exothermic reactions.

FIG. 1

FIG. 2

FIG. 3

**EP 2 332 643 B1**

## RÉFÉRENCES CITÉES DANS LA DESCRIPTION

**Documents brevets cités dans la description**

- EP O716881 B
- US 5025831 A
- US 4836989 A
- US 5232283 A
- US 5567396 A
- FR 2824495 A
- US 6881387 B
- EP 1721660 B
- US 6180068 B
- US 20040134836 A
- WO 2003039733 A